# EUROPEAN PATENT SPECIFICATION

(11) **EP 1 752 340 B1**
(45) Date of publication and mention of the grant of the patent: **05.03.2008**
(21) Application number: 05254368.3
(22) Date of filing: 12.07.2005
(51) Int. Cl.: B60R 21/16

(54) **Seatbelt pretensioner**
Gurtstraffer
Prétensionneur de ceinture de sécurité

(43) Date of publication of application: 14.02.2007
(73) Proprietor: KEY SAFETY SYSTEMS, INC., Sterling Heights, MI 48314 (US)
(72) Inventor: Bell, John, Carlisle Cumbria, CA 2 6QU (GB)
(74) Representative: Freeman, Jacqueline Carol

(56) References cited:
- DE-A1- 2 543 068
- DE-A1- 2 548 368
- DE-A1- 3 237 680

## Description

The present invention relates to a pretensioner and particularly to a pretensioner for a vehicle safety restraint mechanism such as a seat belt.

Traditionally a seat belt safety restraint comprises a length of belt webbing connected at three points to load bearing parts of a vehicle. Typically one end of the webbing is attached to a belt anchor which is bolted to a load bearing longitudinal chasis member on one side of a seat between the seat and the adjacent door. The webbing is arranged to pass laterally across the hips of the seat occupant to a buckle mechanism fixed to the vehicle on the opposite side of the seat, and then diagonally across the torso of the seat occupant, via a shoulder support, to a retractor mounted on the B pillar adjacent the door. The buckle mechanism engages a buckle tongue which is slidably attached to the webbing.

The retractor fitted at the pillar end of the webbing increases the comfort for the seat occupant restrained by the belt and allows the webbing to pay out under relatively low loads to enable limited movement of the restrained seat occupant, for example to reach in-car entertainment controls or storage compartments. The retractor is biased to keep the webbing relatively taut about the seat occupant and a locking element is included to lock the retractor against webbing payout in the event of a dangerous situation being detected. For example, an acceleration sensor activates if the vehicle undergoes rapid acceleration or deceleration indicative of a crash.

In recent years, pretensioners have been introduced to rapidly pull in a length of webbing to actively tighten the belt about the vehicle occupant in the event of a crash. This takes up any slack which may have developed in the belt and helps to more correctly position the vehicle occupant in the seat to maximise the effect of the belt protection and of any secondary safety restraint such as an airbag.

Pretensioners use a force reservoir such as a pyrotechnically operated gas generator to provide an impulse of sufficient magnitude to tighten the belt in a short space of time, ideally before the crash pulse takes full effect.

Pretensioners are usually located at the retractor end of the webbing where they typically rewind the retractor mechanism to pull in a length of webbing. They have also been used at the buckle fastening to pull back the buckle mechanism. Buckle pretensioners have the advantage that they effectively pull in twice as much webbing length for the same translational movement of the pretensioning mechanism because a single movement of the buckle will pull in both the lap and the shoulder portions of webbing across a vehicle occupant at the same time. However there is limited space in a vehicle around a buckle fastening and there is a tendency in modern vehicles, particularly those with highly adjustable seats, for buckles to be smaller and buckle stalks to be shorter. This limits the performance of a buckle pretensioner.

Pretensioners have recently also been used at the belt anchor end of the webbing in the region of the adjacent door sill. However the pretensioning performance of these so-called sill pretensioners has been extremely limited because of the limits of space in this area of the vehicle, and they have not hitherto been capable alone of taking up sufficient slack in the belt webbing to satisfy safety standards. Thus sill pretensioners have previously only been used only to supplement retractor and buckle pretensioners. In particular they have been suggested, in EP 05251728 to operate in conjunction with a slider bar in three door vehicles.

DE 25 48 368 A1 (closest prior art) discloses a seat belt tightener that operates by allowing the entire vehicle seat to move forward due to the inertia of a crash. Mating abutments on the bottom of the seat and the vehicle structure limit the amount of forward movement of the seat. There is no provision for a mechanism that can multiply the amount of belt tightening with respect to the distance that the seat moves forward. While this seat belt tightening arrangement operates by pulling the belt webbing in a forward direction, with respect to vehicle travel, there is a recognised aversion to a vehicle seat moving at all during a crash because if the crash is severe enough the abutment arrangement could fail with very dire consequences for the seat occupant.

DE 3237680 A1 discloses a seat belt system wherein during a crash tightening of the lap belt is compensated for by loosening of the shoulder belt and vice versa. The anchoring end of the lap belt and the anchoring/retractor end of the shoulder belt are connected to one another using a block and tackle arrangement. The present invention addresses a more conventional pretensioning system in which both the lap and shoulder belt portions of the seat belt webbing are tensioned at the same time.

DE 2 543 068 A1, which corresponds to US 4,015860 A, discloses a seat belt pretensioner that is orientated to pull on the lap belt and shoulder belt perpendicular to the direction of vehicle travel. The pretensioner has two pulling devices and is located under the vehicle seat. The present invention overcomes the need for two pulling devices with a simpler device that is also a cost improvement.

Known pretensioning arrangements tend to be bulky and it is desirable to minimise their packet size to save space but of course this must be done without compromising their capability to pull in a sufficient length of the seat belt webbing in the event of a crash.

According to the present invention there is provided a pretensioning arrangement for seat belt webbing at a belt anchor end of a three point vehicle safety restraint seat belt, the pretensioning arrangement comprising:
a fixed member comprising a cylinder;
a piston housed within and movable along the cylinder generally horizontally in a line generally parallel to the normal line of the vehicle;
a force reservoir for driving the piston along the cylinder;
an elongate connecting member connected at one end to the piston and connected at its other end to the seat belt webbing;
a webbing guide fixed to the seat at the side of the seat adjacent the belt anchor end of the webbing to provide an effective anchorage point spaced from the belt anchor end of the webbing under pretensioning conditions so that when the piston is moved in a direction generally opposite to the normal direction of movement of the vehicle then the seat belt webbing moves in a pretensioning direction in response to a signal from a crash sensor; and wherein the webbing guide is arranged so that it effectively reverses the direction in which the webbing needs to be pulled to take up webbing slack.

The webbing guide effectively reverses the direction of the webbing and enables the pretensioning unit to be sited along the base of the seat squab, and it can therefore be as long as the depth of the seat itself. Previously for sill pretensioners the pretensioning unit itself had to be sited effectively behind the belt anchor which took up valuable space behind any seat and limited the size of the unit thus limiting the effectiveness of its pretensioning capacity. This was especially true with the slider bar sill pretensioner described in EP 05251728.

The movable member preferably moves in a direction generally parallel to the normal line of movement of the vehicle, i.e. the horizontal forwards-backwards line, generally parallel to a seat rail to which the seat is secured to the vehicle. Most preferably it moves in a horizontal backwards direction relative to the normal direction of movement of the vehicle, and pulls the seat belt webbing in a forward direction. This makes the arrangement particularly compact.

A piston-cylinder pretensioning unit may be used, having a piston housed within and movable along a cylinder. In this example the fixed member comprises the cylinder and the movable member comprises the piston which is attached or attachable to the seat belt in the region of the belt anchor near the sill of an adjacent door. The means for moving the piston along the cylinder may comprise a pyrotechnically activated gas generator.

The fixed member may be anchored to the floor of the vehicle or the sill of the adjacent door, but preferably it is anchored to a load bearing part of the seat such as the seat rail or generally parallel to it.

The belt anchor end of the seat belt webbing may be fixed via an anchorage point on a seat frame or on a seat rail to which the seat frame is slidably attached. The movable means is preferably connected or connectable to the webbing between the webbing guide and the anchorage point, for example by being looped around the webbing or connectable by a quick attachment device. This positioning has the advantage of pulling in a total length of webbing equal to twice the distance moved by the piston, allowing the pretensioner to be more compact and more efficient than known sill pretensioners.

The arrangement of the invention may be used in three door vehicles as well as four or five door vehicles because it is so compact and can be located within the footprint of the seat so it does not restrict access to rear seats when fitted in the front seats of a three door vehicle, nor take up storage space when fitted in rear seats of any vehicle.

The movable member may be attached to the seat belt webbing by a cable which may be formed as a double cable looped around the seat belt webbing and slidable along it.

Preferably means are provided for restraining motion of the movable member in a non-pretensioning direction, for example by ratchet teeth in the fixed member, such as the cylinder of a piston-cylinder arrangement and at least one cooperating tooth on the movable member, such as the piston. A suitable mechanism is shown in WO97/06995. Locking the pretensioner against return movement in this way prevents a loss of tension in the seat belt after pretensioning has been carried out. Ratchet mechanisms are known for different seat belt restraint applications and so the pretensioner of the present invention can advantageously be constructed using standard parts and manufacturing processes, and thus offers a relatively low cost locking mechanism.

The webbing guide is preferably positioned to guide the webbing so that in the region of the pretensioning unit the webbing adopts a profile which is generally parallel to the line of force exerted by the pretensioning unit or at least adopts a line angled to the line of force of the pretensioning unit by less than 30 degrees.

The crash sensor is typically activated when the vehicle exceeds a predetermined acceleration or deceleration threshold.

For a better understanding of the present invention, and to show how the same may be carried into effect, reference will now be made, by way of example, to the accompanying drawings, in which:
Figure 1 is a schematic side view of a pretensioning arrangement according to a first embodiment of the present invention, in an unworn condition;
Figure 2 shows the pretensioning arrangement of figure 1 in a worn condition;
Figure 3 shows the pretensioning arrangement of figures 1 and 2 in a pretensioned condition;
Figure 4 is a schematic side view of an alternative arrangement of the pretensioner of figures 1 to 3.
Figure 5 is a schematic side view of part of figure 1 on a larger scale.

As used throughout this description, and in the claims, terms such as "forward" and "rearward", "front" and "back" and similar terms are understood to refer to the normal direction of movement and to the front and rear of a vehicle in which the seat belt pretensioning apparatus of the invention is installed. Similarly, terms such as "above" and "below", and "higher" and "lower" are understood to be relative to the normal orientation of the passenger compartment of a vehicle in which the seat belt pretensioning apparatus of the invention is installed.

In all the figures a vehicle seat 1 is shown fitted with a seat belt in known manner. The seat belt comprises seat belt webbing 2, one end of which is attached to, or connected in a load bearing manner, to a load bearing part of the vehicle. It may be anchored to a chassis member, part of the floor of the vehicle, to a door sill or to part of the seat 1 or the seat rail. The webbing 2 passes via a shoulder support 5 to a retractor 4, typically fixed to the B pillar of a vehicle. A pretensioning unit is shown at 6 and this would typically comprise, as is well known, a piston-cylinder unit in which a piston 13 is driven along a cylinder 7, usually by pyrotechnic means, in the event of a crash situation. The piston 13 is connected by a cable 9 to the webbing 2.

A webbing guide 11 is fixed to the seat 1 and positioned at one end of the pretensioning unit, in the region of the so-called R14 zone 12 shown schematically between the broken lines extending from the buckle point 8. The R14 zone is that recommended for sill end support of the webbing in internationally recognised safety standard specifications.

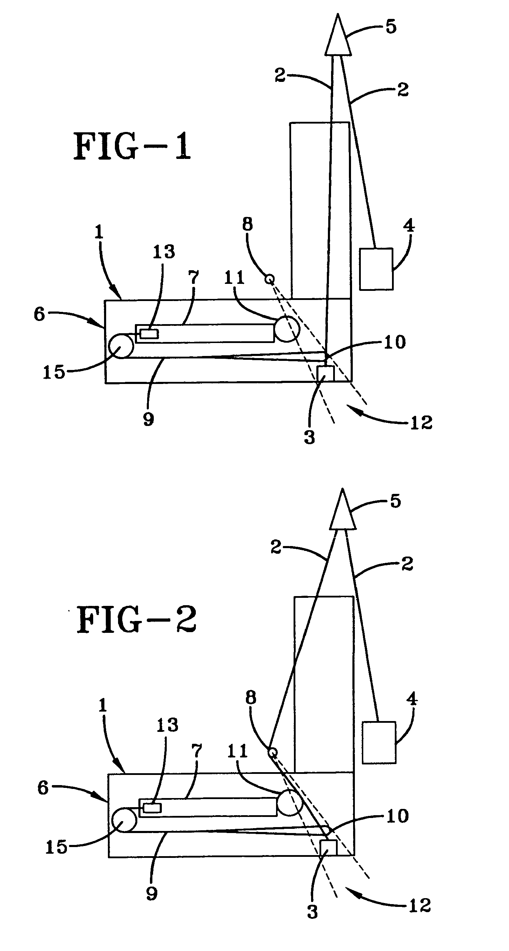

In the first embodiment of figures 1 to 3 and 5 the sill end of the webbing 2 is anchored to the seat rail via a belt anchor point 3 in a load bearing manner.

In figure 1 the seat belt is shown in the unworn condition, ie is not fastened across the vehicle seat 2, and thus the webbing 2 passes in a generally vertical line up the side of the seat 2 adjacent a door, from the anchorage point 3 to the shoulder support 5, as shown. The pretensioning unit 6 has not been activated.

In figure 2 the seat belt is shown in the worn condition, ie is fastened across the seat 2 at a buckle point schematically indicated at 8 on the opposite side of the seat to the belt anchor 3. Again the pretensioning unit 6 has not been activated.

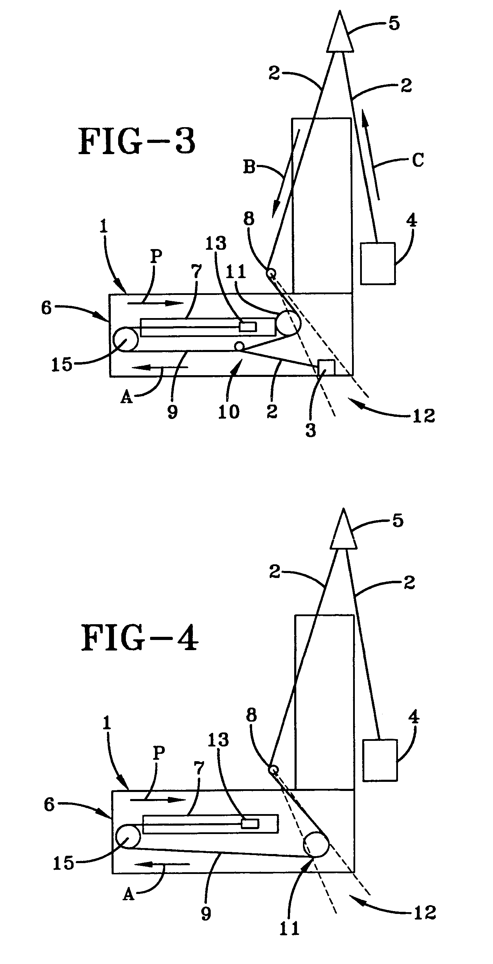

In figure 3 the seat belt is shown in the pretensioned condition in which the pretensioning unit 6 has been activated the piston has moved in the direction of arrow P and has pulled the cable 9 in the direction of arrow A. The cable is looped around the webbing 2 in the region 10 and thus pulls this region of the webbing 2 in the direction of arrow A, drawing in any slack in the webbing along the path shown by the arrows B and C. The pretensioning unit activates in a crash when a crash sensor detects a high acceleration or deceleration, and the sensor also locks the retractor 4 against further payout of webbing in a manner well known to persons skilled in the art.

A ratchet, or other form of non-return mechanism may be built directly into the pretensioning unit 6 in known manner. For example sawtooth-shaped projections may be built into the inside wall of the cylinder 7 and a cooperating tooth attached to the piston to allow the piston to move in the pretensioning direction A but not the opposite direction. One suitable mechanism is shown in WO97/06995.

As shown in the figures, the belt anchor 3 and the webbing guide 11 are positioned in the area labelled 12 which is known as the R14 zone from the standards of the Vehicle Anchorage Pull Test, currently known as the R14 specification, requiring the seat belt to be strong enough to withstand loads of at least 15kN.

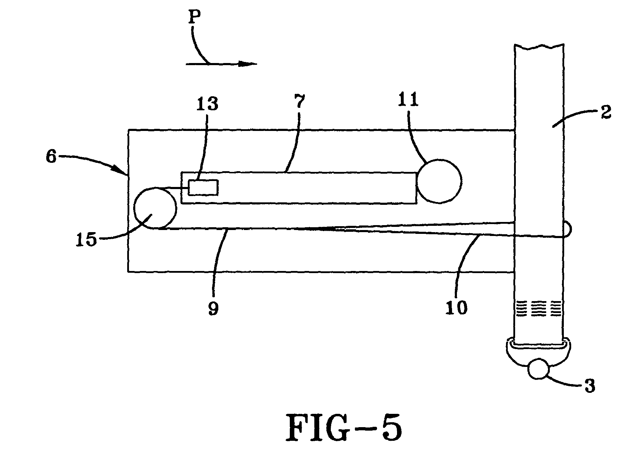

The cable 9 may be formed as a double cable looped over the webbing 2, as shown more clearly in figure 5.

The cable loop shown at 10 in the figures may be coated with a plastics material or encased in a plastics tube so as to more easily slide along the webbing 2 and to protect the fabric of the webbing from chaffing by the cable.

The load bearing webbing guide 11 fixed to the seat improves the performance of the pretensioning arrangement because it makes the cable 9 travel along a line more parallel and closer to the line of force exerted by the pretensioning unit 6. Preferably the arrangement is such that the cable is angled to the line of force of the pretensioning unit 6 by no more than 30 degrees. This increase in performance means that a physically shorter pretensioning unit 6 can be used to achieve the same pretensioning effect, i.e. to pull in the same length of webbing slack.

In figure 4 an alternative embodiment is shown in which the belt anchor end of the webbing 2 is directly connected to the piston 13 of the pretensioning unit 6. The webbing guide 11 is positioned slightly lower on the seat 1 in this embodiment to provide an effective load bearing anchor point close to the line of the cable 9.

Figure 5 illustrates the embodiment of figures 1 to 3 in more detail and particularly shows one way in which the cable 9 can be attached to the belt webbing 2 by a loop 10 encompassing the webbing 2 just above the belt anchor 3. The cable 9 is attached to the piston 13 of the pretensioning unit 6 which moves in the direction of arrow P to pull in the cable and take slack out of the webbing 2 by moving it in the direction of arrow A to engage the webbing guide 11.

## Claims

1. A pretensioning arrangement for seat belt webbing at a belt anchor end of a three point vehicle safety restraint seat belt, the pretensioning arrangement comprising:
a fixed member comprising a cylinder (7);
a piston (13) housed within and movable along the cylinder (7) generally horizontally in a line generally parallel to the normal line of the vehicle;
a force reservoir for driving the piston along the cylinder (7) ;
an elongate connecting member (9) connected at one end to the piston and connected at its other end to the seat belt webbing;
a webbing guide (11) fixed to the seat (1) at the side of the seat adjacent the belt anchor end of the webbing to provide an effective anchorage point spaced from the belt anchor end of the webbing (2) under pretensioning conditions, so that when the piston is moved in a direction generally opposite to the normal direction of movement of the vehicle then the seat belt webbing (2) moves in a pretensioning direction in response to a signal from a crash sensor; and
wherein the webbing guide is arranged so that it effectively reverses the direction in which the webbing needs to be pulled to take up webbing slack.

2. A pretensioning arrangement according to claim 1 wherein the other end of the elongate connecting member (9) is looped around the webbing in the sill end region of the webbing (2).

3. A pretensioning arrangement according to claim 1 wherein the other end of the elongate connecting member (9) is attached in the sill end region of the webbing by a mechanically attachable member.

4. A pretensioning arrangement according to any one of the preceding claims wherein the force reservoir comprises a gas generator which is pyrotechnically activated.

5. A pretensioning arrangement according to any one of the preceding claims wherein the elongate connecting member comprises a metal cable (9).

6. A pretensioning arrangement according to claim 5 wherein the elongate connecting member comprises a double cable (9).

7. A pretensioning arrangement according to any one of claims 5 or 6 wherein the cable (9) is coated with plastics material.

8. A pretensioning arrangement according to claim 7 wherein the cable (9) is enclosed in a tube of plastics material.

9. A pretensioning arrangement according to any one of the preceding claims wherein the fixed member (7) comprises means for restraining motion of the movable member (16; 53) in a non-pretensioning direction.

10. A pretensioning arrangement according to claim 9 wherein the restraining means comprises ratchet teeth in the fixed member and at least one cooperating tooth in the movable member.

11. A pretensioning arrangement according to any one of the preceding claims wherein the belt webbing guide is positioned to guide the webbing (14) so that the webbing adopts a profile which is angled to the line of force exerted by the pretensioning unit (6) by less than 30 degrees.

12. A pretensioning arrangement according to any one of the preceding claims wherein the fixed member is anchored to the vehicle seat.

13. A pretensioning arrangement according to claim 12 wherein the fixed member is anchored to the seat at the side of the seat adjacent the belt anchor end of the webbing.

## Patentansprüche

1. Gurtstrafferanordnung für ein Sicherheitsgurtband an einem Gurtverankerungsende einer Dreipunkt-Sicherheitsgurt-Fahrzeugsicherheitsrückhaltevorrichtung, wobei die Gurtstrafferanordnung aufweist:
ein stationäres Element, das einen Zylinder (7) aufweist;
einen Kolben (13), der innerhalb des Zylinders (7) aufgenommen und längs dessen im Allgemeinen horizontal in einer Linie beweglich ist, die im Allgemeinen parallel zur Normallinie des Fahrzeuges verläuft;
einen Kraftspeicher für das Antreiben des Kolbens längs des Zylinders (7);
ein längliches Verbindungselement (9), das an einem Ende mit dem Kolben und an seinem anderen Ende mit dem Sicherheitsgurtband verbunden ist;
eine Bandführung (11), die am Sitz (1) an der Seite des Sitzes benachbart dem Gurtverankerungsende des Bandes befestigt ist, um einen wirksamen Verankerungspunkt, beabstandet vom Gurtverankerungsende des Bandes (2), unter den Bedingungen des Gurtstraffens bereitzustellen, so dass, wenn der Kolben in einer Richtung im Allgemeinen entgegengesetzt zur normalen Richtung der Bewegung des Fahrzeuges bewegt wird, sich dann das Sicherheitsgurtband (2) in einer Richtung des Gurtstraffens als Reaktion auf ein Signal von einem Aufprallsensor bewegt; und
wobei die Bandführung so angeordnet ist, dass sie die Richtung wirksam umkehrt, in der das Band gezogen werden muss, um den Banddurchhang aufzunehmen.

2. Gurtstrafferanordnung nach Anspruch 1, bei der das andere Ende des länglichen Verbindungselementes (9) um das Band im Schwellerabschlussbereich des Bandes (2) geschlungen wird.

3. Gurtstrafferanordnung nach Anspruch 1, bei der das andere Ende des länglichen Verbindungselementes (9) im Schwellerabschlussbereich des Gurtes mittels eines mechanisch zu befestigenden Elementes befestigt wird.

4. Gurtstrafferanordnung nach einem der vorhergehenden Ansprüche, bei der der Kraftspeicher einen Gasgenerator aufweist, der pyrotechnisch aktiviert wird.

5. Gurtstrafferanordnung nach einem der vorhergehenden Ansprüche, bei der das längliche Verbindungselement ein Metallseil (9) aufweist.

6. Gurtstrafferanordnung nach Anspruch 5, bei der das längliche Verbindungselement ein Doppelseil (9) aufweist.

7. Gurtstrafferanordnung nach einem der Ansprüche 5 oder 6, bei der das Seil (9) mit Kunststoffmaterial beschichtet ist.

8. Gurtstrafferanordnung nach Anspruch 7, bei der das Seil (9) in einem Schlauch aus Kunststoffmaterial eingeschlossen ist.

9. Gurtstrafferanordnung nach einem der vorhergehenden Ansprüche, bei der das stationäre Element (7) ein Mittel für die Bewegungseinschränkung des beweglichen Elementes (16; 53) in einer Richtung aufweist, in der kein Gurtstraffen erfolgt.

10. Gurtstrafferanordnung nach Anspruch 9, bei der das Bewegungseinschränkungsmittel Sperrzähne im stationären Element und mindestens einen zusammenwirkenden Zahn im beweglichen Element aufweist.

11. Gurtstrafferanordnung nach einem der vorhergehenden Ansprüche, bei der die Gurtbandführung positioniert ist, um das Band (14) so zu führen, dass das Band ein Profil annimmt, das zu der Kraftlinie, die durch die Gurtstraffereinheit (6) ausgeübt wird, um weniger als 30 Grad winkelig ist.

12. Gurtstrafferanordnung nach einem der vorhergehenden Ansprüche, bei der das stationäre Element am Fahrzeugsitz verankert ist.

13. Gurtstrafferanordnung nach Anspruch 12, bei der das stationäre Element am Sitz auf der Seite des Sitzes verankert ist, die dem Gurtverankerungsende des Bandes benachbart ist.

## Revendications

1. Dispositif de prétension pour une sangle de ceinture de sécurité au niveau d'une extrémité d'ancrage d'une ceinture d'une ceinture de sécurité de rétention de sécurité à trois points d'un véhicule, le dispositif de prétension comprenant:
un élément fixe comprenant un cylindre (7) ;
un piston (13), logé dans le cylindre (7) et pouvant être déplacé le long de celui-ci, en général de manière horizontale dans une ligne généralement parallèle à la ligne normale du véhicule ;
un réservoir de force pour entraîner le piston le long du cylindre (7) ;
un élément de connexion allongé (9), connecté au niveau d'une extrémité au piston et connecté au niveau de son autre extrémité à la sangle de la ceinture de sécurité ;
un guide de la sangle (11), fixé sur le siège (1) au niveau du côté du siège adjacent à l'extrémité d'ancrage de la ceinture de la sangle, pour établir un point d'ancrage effectif espacé de l'extrémité d'ancrage de la ceinture de la sangle (2) dans des conditions de prétension, de sorte que le déplacement du piston dans une direction généralement opposée à la direction normale du déplacement du véhicule entraîne le déplacement de la sangle de la ceinture de sécurité (2) dans une direction de prétension en réponse à un signal émis par un capteur de collision ; et
le guide de la sangle étant agencé de sorte à inverser effectivement la direction dans laquelle la sangle doit être tirée pour absorber un relâchement de la sangle.

2. Dispositif de prétension selon la revendication 1, dans lequel l'autre extrémité de l'élément de connexion allongé (9) est enroulée en boucle autour de la sangle dans la région d'extrémité du longeron de la sangle (2).

3. Dispositif de prétension selon la revendication 1, dans lequel l'autre extrémité de l'élément de connexion allongé (9) est fixée dans la région d'extrémité du longeron de la sangle par un élément à fixation mécanique.

4. Dispositif de prétension selon l'une quelconque des revendications précédentes, dans lequel le réservoir de force comprend un générateur de gaz à actionnement pyrotechnique.

5. Dispositif de prétension selon l'une quelconque des revendications précédentes, dans lequel l'élément de connexion allongé comprend un câble métallique (9).

6. Dispositif de prétension selon la revendication 5, dans lequel l'élément de connexion allongé comprend un câble double (9).

7. Dispositif selon l'une quelconque des revendications 5 ou 6, dans lequel le câble (9) est revêtu d'un matériau plastique.

8. Dispositif de prétension selon la revendication 7, dans lequel le câble (9) est renfermé dans un tube de matériau plastique.

9. Dispositif de prétension selon l'une quelconque des revendications précédentes, dans lequel l'élément fixe (7) comprend un moyen pour retenir le déplacement de l'élément mobile (16 ; 53) dans une direction n'entraînant pas une prétension.

10. Dispositif de prétension selon la revendication 9, dans lequel le moyen de retenue comprend des dents d'encliquetage dans l'élément fixe et au moins une dent de coopération dans l'élément mobile.

11. Dispositif de prétension selon l'une quelconque des revendications précédentes, dans lequel le guide de la sangle de la ceinture est positionné de manière à guider la sangle (14), de sorte que la sangle adopte un profil incliné de moins de 30 degrés par rapport à la ligne de force exercée par l'unité de prétension (6).

12. Dispositif de prétension selon l'une quelconque des revendications précédentes, dans lequel l'élément fixe est ancré sur le siège du véhicule.

13. Dispositif de prétension selon la revendication 12, dans lequel l'élément fixe est ancré sur le siège au niveau du côté du siège adjacent à l'extrémité d'ancrage de la ceinture de la sangle.
